# EUROPÄISCHE PATENTSCHRIFT

(11) **EP 3 900 161 B1**
(45) Veröffentlichungstag und Bekanntmachung des Hinweises auf die Patenterteilung: **25.01.2023**
(21) Anmeldenummer: 19832573.0
(22) Anmeldetag: 10.12.2019
(51) Int. Cl.: H02K 5/24

(54) **VORRICHTUNG ZUR SCHALLISOLATION EINER MASCHINE**
DEVICE FOR NOISE INSULATION OF A MACHINE
DISPOSITIF D'INSONORISATION D'UNE MACHINE

(30) Priorität: 21.12.2018 DE 102018133366
(43) Veröffentlichungstag der Anmeldung: 27.10.2021
(73) Patentinhaber: Adler Pelzer Holding GmbH, 58099 Hagen (DE)
(72) Erfinder: RIEDERER, Frank, 58455 Witten (DE); KARCZ, Thomas, 44369 Dortmund (DE); SCHULZE, Volkmar, 84069 Schierling (DE)
(74) Vertreter: Bittner, Bernhard
(86) Internationale Anmeldenummer: PCT/EP2019/084386
(87) Internationale Veröffentlichungsnummer: WO 2020/126661

(56) Entgegenhaltungen:
- US-A- 4 991 406
- US-A- 5 588 810
- US-A1- 2008 099 275
- US-A1- 2018 080 666

## Beschreibung

Die vorliegende Patentanmeldung nimmt die Priorität der deutschen Patentanmeldung 10 2018 133 366.8 vom 21. Dezember 2018 in Anspruch, deren Inhalt hiermit durch Bezugnahme zum Gegenstand der vorliegenden Patentanmeldung gehört.

Die Erfindung betrifft eine Vorrichtung zur Schallisolation einer Maschine, bei der es sich insbesondere um einen Elektromotor, einen Generator oder einen Verdichter handelt.

Zur Reduktion von Geräuschemissionen mechanischer, elektromechanischer oder elektrischer Maschinen sind deren Gehäuse von Schallisolationskapseln umgeben. Die Kapseln bzw. Manschetten weisen eine schalldämpfende Verbundmaterialwand auf, die mit einer Kunststoff-Trägerschicht als Schwerschicht und einer Schalldämpfungsschicht als am Gehäuse der Maschine anliegende Innenschicht versehen ist. Derartige Manschetten bzw. Kapseln sind beispielsweise für die Schallisolation von Elektromotoren als Antrieb von Fahrzeugen bekannt.

Die bekannten Manschetten bzw. Kapseln werden, nachdem sie um das Gehäuse der Maschine gelegt sind, mittels Bändern, insbesondere mittels Klebebändern oder Klettbändern zusammengehalten bzw. in Position gehalten. Die Montage derartiger Schallisolationen ist vergleichsweise aufwendig, was demzufolge mit zusätzlichen Kosten verbunden ist.

Aus US-A-2018/0080666, US-A-2008/0099275, US-A-2005/0056481, US-A-4 991 406 und US-A-6 062 033 sind verschiedene Schallisolationsumhüllungen für während des Betriebs Schallemissionen erzeugende Einrichtungen wie z.B. Kompressoren beschrieben. Kunststoffe und ihre Eigenschaften sind in DOMININGHAUS, Hans: Die Kunststoffe und ihre Eigenschaften, 5., völlig neu bearb. und erw. Aufl. Berlin [u.a.]: Springer, 1998, S. 285 - ISBN 978-3-662-06664-5 beschrieben, während ERHARD, Gunter: Konstruieren mit Kunststoffen, 4. Aufl., München: Hanser, 2008, S. 332 - ISBN 978-3-446-41646-8 das Konstruieren mit Kunststoff beschreibt.

Aufgabe der Erfindung ist es, eine Vorrichtung zur Schallisolation einer Maschine zu schaffen, die sich auf einfache Art und Weise anlegen und verschließen lässt.

Zur Lösung dieser Aufgabe wird mit der Erfindung eine Vorrichtung zur Schallisolation einer Maschine vorgeschlagen, wobei die Vorrichtung versehen ist mit
- einer Manschette, die eine schalldämpfende Verbundmaterialwand mit einer Kunststoff-Trägerschicht mit einer Shore-A-Härte im Bereich von 66 bis 90, insbesondere im Bereich von 70 bis 85, als Außenschicht und eine Schalldämpfungsschicht als Innenschicht aufweist,
- wobei die Verbundmaterialwand zwei aneinander- und/oder übereinanderliegende Randbereiche mit jeweils einem Begrenzungsrand aufweist, die mittels mindestens einer Steckverbindungsanordnung aneinander- und/oder übereinanderliegend verbindbar sind,
- wobei die mindestens eine Steckverbindungsanordnung eine in dem einen ersten Randbereich der Verbundmaterialwand angeordnete Stecklasche und ein in den anderen zweiten Randbereich der Verbundmaterialwand angeordnetes Aufnahmeelement aufweist, in das die Stecklasche einsteckbar ist,
- wobei die Stecklasche einen Steg aufweist, der ein mit der Kunststoff-Trägerschicht verbundenes Ende sowie einen diesem Ende abgewandten Endabschnitt mit einem Einsteckende und eine Oberseite sowie eine Unterseite aufweist,
- wobei der Steg an der Unterseite seines Endabschnitts mindestens eine Verriegelungsvertiefung aufweist und
- wobei das Aufnahmeelement der mindestens einen Steckverbindungsanordnung eine zum ersten Randbereich hin weisende Einstecköffnung für das Einsteckende und zumindest einen Teil des Endabschnitts des Steges der Stecklasche und einen in Einsteckrichtung der Stecklasche in die Einstecköffnung betrachtet vor dieser in dem zweiten Randbereich angeordneten Verriegelungsvorsprung aufweist, der bei von der Einstecköffnung aufgenommenem Einsteckende des Steges der Stecklasche in die Verriegelungsvertiefung an dessen Unterseite eingetaucht ist.

Sinngemäß sieht die Erfindung vor, den Verschluss für die Manschette als integralen Bestandteil der Kunststoff-Trägerschicht auszuführen, und zwar in Form mindestens einer Steckverbindungsanordnung. Die Steckverbindungsanordnung weist eine Stecklasche an einem ersten Randbereich der Verbundmaterialwand und ein Aufnahmeelement an einem zweiten Randbereich der Verbundmaterialwand auf, die dem ersten Randbereich gegenüberliegt. Durch die Steckverbindungsanordnung kann nun die Manschette an den beiden Randbereichen der Verbundmaterialwand zusammengehalten bzw. "geschlossen" werden. Die Manschette kann mehr als zwei Teile aufweisen, von denen jedes eine schalldämpfende Verbundmaterialwand umfasst. Im geschlossenen Zustand ist dann jedes Teil der Manschette durch mindestens eine Steckverbindungsanordnung mit einem benachbarten Manschettenteil verbunden.

Die Stecklasche und das Aufnahmeelement jeder Steckverbindungsanordnung sollten eine gewisse Flexibilität aufweisen. Insoweit von Vorteil ist es, wenn die Kunststoff-Trägerschicht aus einem Material besteht, dessen Shore-A-Härte im Bereich von 66 bis 90 und insbesondere im Bereich von 70 bis 85 liegt. Als Kunststoffmaterial der Trägerschicht (Schwerschicht) eignet sich beispielsweise EVA/PE, PE, PP, EPDM, TPE, TPO.

Als Material für die Schalldämpfungsschicht eignen sich insbesondere PU-Schäume.

Die Stecklasche, die aus dem Kunststoff-Trägerschichtmaterial besteht, weist einen Steg auf, der ein erstes mit der Kunststoff-Trägerschicht verbundenes Ende sowie einen diesem Ende abgewandten Endabschnitt mit einem Einsteckende als zweites Ende und eine Oberseite sowie eine Unterseite aufweist. Der Steg der Stecklasche steht also vom Randbereich der Verbundmaterialwand ab. An der Unterseite des Endabschnitts des Steges weist dieser mindestens eine Verriegelungsvertiefung auf, in die ein Verriegelungsvorsprung des Aufnahmeelements eingetaucht ist, wenn die Steckverbindung zwischen Stecklasche und Aufnahmeelement realisiert ist. Das Aufnahmeelement weist ferner eine Einstecköffnung für das Einsteckende der Stecklasche und gegebenenfalls für zumindest einen Teil des Endabschnitts des Steges der Stecklasche auf. In Einsteckrichtung der Stecklasche (in die Einstecköffnung) betrachtet vor der Einstecköffnung befindet sich der Verriegelungsvorsprung. Im Steckverbindungszustand liegt das Einsteckende mit zugehörigem Endabschnitt des Steges der Stecklasche an dem Randbereich der Verbundmaterialwand an, der sich örtlich vor der Einstecköffnung befindet. In diesem Bereich befindet sich der Verriegelungsvorsprung, so dass dieser nun in die Verriegelungsvertiefung hineinragt und für eine Verriegelung und eine Positionsbeibehaltung der Stecklasche bei von der Einstecköffnung aufgenommenem Einsteckende der Stecklasche sorgt. Insbesondere dann, wenn die Steckverbindungsanordnung in einem konvex gewölbten Bereich des Gehäuses der schallzuisolierenden Maschine angeordnet ist, sorgt die enge Anlage der Schalldämpfungsschicht am Gehäuse der Maschine für einen gewissen Anlagedruck der Stecklasche von außen gegen den Randbereich der Verbundmaterialwand im Bereich vor der Einstecköffnung. Damit wird einem "Abheben" der Stecklasche und damit einem Außereingriffbringen von Verriegelungsvorsprung und Verriegelungsvertiefung entgegengewirkt, so dass die Steckverbindung den beim normalen Betrieb der Maschine bzw. beim normalen Betrieb der gegebenenfalls bewegbaren Konstruktion (beispielsweise Fahrzeug), an bzw. in der die schallisolierte Maschine angeordnet ist, standhält.

Zur weiteren Sicherung der Steckverbindung ist gemäß einer Weiterführung der Erfindung vorgesehen, dass zwischen dem Verriegelungsvorsprung des Aufnahmeelements und dem Begrenzungsrand des zweiten Randbereichs ein Niederhaltebügel angeordnet ist, der eine in Einsteckrichtung der Stecklasche in die Einstecköffnung betrachtet vor dem Verriegelungsvorsprung angeordnete Durchstecköffnung für die Stecklasche bildet. In Einsteckrichtung betrachtet vor der Einstecköffnung des Aufnahmeelements befindet sich bei dieser Weiterbildung der Erfindung ein Niederhaltebügel, unter dem hindurch die Stecklasche bewegt werden muss, um das Einsteckende des Steges in die Einstecköffnung des Aufnahmeelements einzuführen. Zwischen dem Niederhaltebügel und der Einstecköffnung bzw. gegebenenfalls auch unterhalb des Niederhaltebügels befindet sich der Verriegelungsvorsprung des Aufnahmeelements. Damit ist der Eingriff von Verriegelungsvorsprung und Verriegelungsvertiefung entweder durch den Niederhaltebügel zusätzlich gesichert oder aber dieser Eingriff der beiden zuvor genannten Komponenten befindet sich zwischen Niederhaltebügel und Einstecköffnung und ist auf diese Art und Weise gegen ein unbeabsichtigtes Öffnen gesichert.

Da die Stecklasche vor dem Einstecken in die Einstecköffnung über den vor der Einstecköffnung befindlichen Verriegelungsvorsprung hinweg bewegt werden muss und gegebenenfalls auch noch unter dem Niederhaltebügel hindurch bewegt werden muss, ist es von Vorteil, wenn sowohl die Stecklasche als auch das Aufnahmeelement in gewisser Weise flexibel bzw. elastisch ausgebildet sind. Diesbezüglich ist es von Vorteil, wenn das Kunststoffmaterial der Trägerschicht, aus dem sowohl die Stecklasche als auch das Aufnahmeelement gebildet ist, eine gewisse Flexibilität aufweist, was durch Kunststoffmaterial mit dem oben angegebenen Shore-A-Härtebereich gewährleistet ist.

Die Stecklasche kann vom Begrenzungsrand des ersten Randbereichs der Verbundmaterialwand abstehen; es ist aber auch möglich, dass unterhalb der Stecklasche der Randbereich des Begrenzungsrandes der Verbundmaterialwand verläuft, die Stecklasche also sozusagen oberhalb des Randbereichs angeordnet ist. Zwischen Stecklasche und Randbereich befindet sich dann im geschlossenen Zustand der Steckverbindungsanordnung der Randbereich des gegenüberliegenden Begrenzungsrandes der Verbundmaterialwand. Entweder sind beide Schichten der Verbundmaterialwand in diesem Zwischenraum angeordnet oder aber auch nur die Schalldämpfungsschicht oder auch nur die Kunststoff-Trägerschicht.

Wie bereits oben ausgeführt, ist es zweckmäßig, wenn die Stecklasche und das Aufnahmeelement einteilig mit der Kunststoff-Trägerschicht ausgebildet sind. Es ist aber auch möglich, dass Stecklasche und Aufnahmeelement als separate Elemente hergestellt werden, um dann beispielsweise durch Verkleben oder Verschweißen mit der Kunststoff-Trägerschicht in den Randbereichen der beiden besagten Begrenzungsränder befestigt werden. Andere Befestigungsmöglichkeiten durch beispielsweise mechanische Befestigungselemente (beispielsweise Vernietung) sind ebenfalls möglich.

Zur weiteren Verbesserung des Zusammenhalts von Stecklasche und Aufnahmeelement kann vorgesehen sein, dass der Endabschnitt des Steges der Stecklasche an seiner Oberseite einen erhabenen Verdickungsbereich aufweist. Hierbei kann vorgesehen sein, dass der gesamte Endabschnitt des Steges gegenüber dem Rest des Steges verdickt und an der Oberseite erhaben ist.

Des Weiteren kann mit Vorteil vorgesehen sein, dass der Verdickungsbereich eine dem Einsteckende des Steges der Stecklasche abgewandte Verriegelungsschulter aufweist, die durch eine insbesondere im Wesentlichen orthogonal zur Oberseite des Steges verlaufende Verriegelungsfläche gebildet ist und zur Anlage an dem der Einstecköffnung zugewandten Rand des Niederhaltebügels des Aufnahmeelements vorgesehen ist. Auf der Oberseite des Steges befindet sich eine Verdickung, die zu dem dem Einsteckende abgewandten Ende der Verdichtung hin eine Verriegelungsschulter in Form einer insbesondere orthogonal zur Oberseite des Steges verlaufende Verriegelungsfläche bildet. Diese Verriegelungsfläche kann auch einen Hinterschnitt bilden, zwischen sich und dem Steg in dem sich an die Verriegelungsfläche anschließenden Bereich des Steges also einen spitzen Winkel bilden. Die Verriegelungsfläche liegt nun an dem der Einstecköffnung zugewandten Rand des Niederhaltebügels des Aufnahmeelements an, ist also sozusagen zwischen Einstecköffnung und Niederhaltebügel "gefangen".

In zweckmäßiger Weiterbildung der Erfindung kann ferner vorgesehen sein, dass eine die Einstecköffnung des Aufnahmeelements bildende Verdickung auf und/oder an der Kunststoff-Trägerschicht, der Verriegelungsvorsprung des Aufnahmeelements sowie der Steg der Stecklasche und, sofern vorhanden, der Niederhaltebügel des Aufnahmeelements sowie der Verdickungsbereich des Steges der Stecklasche mit Verriegelungsschulter aus dem Material der Kunststoff-Trägerschicht hergestellt sind.

Des Weiteren kann mit Vorteil vorgesehen sein, dass eine die Einstecköffnung des Aufnahmeelements bildende Verdickung auf und/oder an der Kunststoff-Trägerschicht, der Verriegelungsvorsprung des Aufnahmeelements sowie der Steg der Stecklasche und, sofern vorhanden, der Niederhaltebügel des Aufnahmeelements sowie der Verdickungsbereich des Steges der Stecklasche mit Verriegelungsschulter aus dem Material der Kunststoff-Trägerschicht mit dieser einteilig hergestellt ist.

Schließlich kann auch mit Vorteil vorgesehen sein, dass die Schalldämpfungsschicht an dem einen Randbereich der Verbundmaterialwand auf und/oder an der Kunststoff-Trägerschicht des anderen Randbereichs der Verbundmaterialwand anliegt. Die Ausgestaltung der Anlageflächen an den beiden durch die Steckverbindungsanordnung miteinander verbundenen Begrenzungsrändern der Manschette bzw. zweier Teile der Manschette kann unterschiedlich ausgebildet sein, und zwar je nach Anforderung. So ist es beispielsweise möglich, dass die Schalldämpfungsschicht an dem einen Begrenzungsrand die außenliegende Kunststoff-Trägerschicht am anderen Begrenzungsrand überlappt. Auch können sich die Schalldämpfungsschichten an den Begrenzungsrändern kontaktieren. Schließlich kann bei der Verbindung der besagten Begrenzungsränder auch vorgesehen sein, dass diese durch entsprechende Formgebung der Kunststoff-Trägerschichten miteinander einen Formschluss bilden (eine Vorwölbung der Kunststoff-Trägerschicht an dem einen Begrenzungsrand taucht von unten in eine Mulde in der Kunststoff-Trägerschicht des anderen Begrenzungsrandes ein). Hierdurch werden die beiden miteinander zu verbindenden Teile der Manschette zusätzlich zusammengehalten.

In weiterer vorteilhafter Ausgestaltung der Erfindung kann vorgesehen sein, dass die Verbundmaterialwand der Manschette mehrteilig ausgebildet ist und dass die einzelnen Teile der Verbundmaterialwand durch jeweils ein oder mehrere Steckverbindungsanordnungen gemäß Erfindung und/oder zumindest einer ihrer oben genannten Ausführungsformen miteinander mechanisch verbunden sind.

Als Alternative dazu kann die Manschette zwei Halbschalen aufweisen, von denen jede eine Verbundmaterialwand aufweist, dass die beiden Halbschalen zum Aufklappen und zum Zuklappen miteinander beweglich verbunden sind, dass die Verbundmaterialwand jeder Halbschale einen Randbereich aufweist und dass die Verbundmaterialwände beider Halbschalen an ihren Randbereichen mittels ein oder mehrerer Steckverbindungsanordnung gemäß Erfindung und/oder zumindest einer ihrer oben genannten Ausführungsformen miteinander mechanisch verbunden sind.

Die Erfindung wird nachfolgend anhand eines Ausführungsbeispiels und unter Bezugnahme auf die Zeichnung näher erläutert. Im Einzelnen zeigen dabei:
- Fig. 1: perspektivisch und schematisch die Kapselung bzw. Ummantelung des Gehäuses eines Elektromotors mit einer schallisolierenden Manschette gemäß einem Ausführungsbeispiel der Erfindung,
- Fign. 2 bis 4: verschiedene Ansichten (perspektivisch bzw. in Seitenansicht) einer Steckverbindungsanordnung im noch nicht verbundenen Zustand (Fig. 2) sowie in verbundenem Zustand (Fign. 3 und 4) und
- Fign. 5 bis 10: verschiedene Alternativen für die Überlappung von Verbundmaterialwänden zweier miteinander zu verbindender Manschettenteile der Schallisolationsvorrichtung .

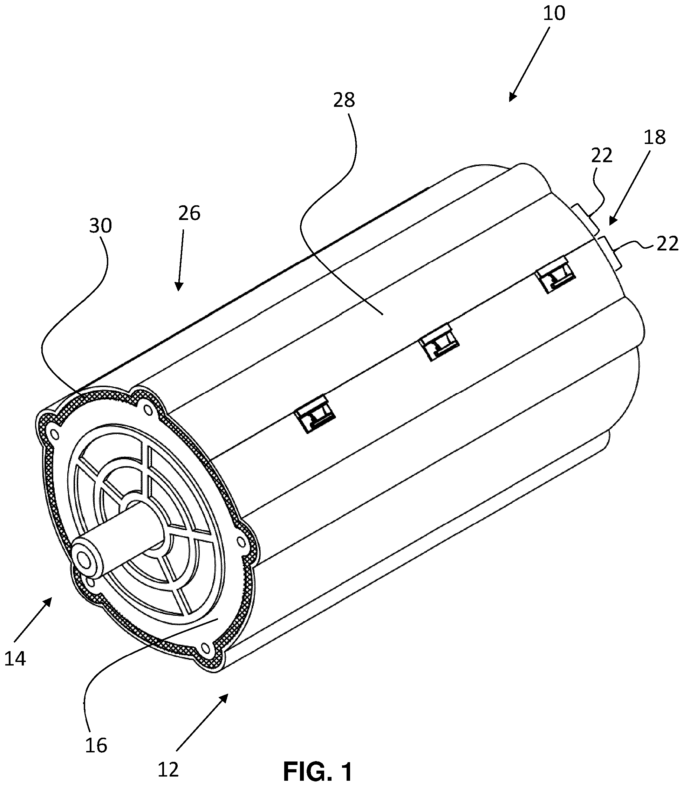

Fig. 1 zeigt ganz allgemein einen Anwendungsbereich der erfindungsgemäßen Schallisolationsvorrichtung 10. In diesem Ausführungsbeispiel dient eine Manschette 12 der Schallisolation eines Elektromotors 14, um dessen Gehäuse 16 die Manschette 12 gelegt ist. Hierbei umschließt die Manschette 12 das Gehäuse 16 des Elektromotors 14 möglichst eng.

In Fig. 1 ist die Manschette 12 als vorgeformter Ring oder Bund bzw. Bahnmaterial ausgebildet, wobei die Manschette geschlitzt ist und damit zwei Begrenzungsränder 18, 20 aufweist, die im geschlossenen Zustand der Manschette 12 aneinanderliegende Randbereiche 22, 24 definieren.

Die Manschette 12 weist eine Verbundmaterialwand 26 auf, die eine außenliegende Kunststoff-Trägerschicht 28 und eine innenliegende Schalldämpfungsschicht 30 aufweist. Beide Schichten sind gegen ein unbeabsichtigtes Ablösen gesichert miteinander verbunden. Dies erfolgt beispielsweise in einem Werkzeug, in das die vorgefertigte Kunststoff-Trägerschicht 28 eingelegt wird, um dann gegen diese Kunststoff-Trägerschicht 28 das Schalldämpfungsmaterial anzuformen. Diese Technologie ist grundsätzlich bekannt und soll hier nicht weiter erläutert werden.

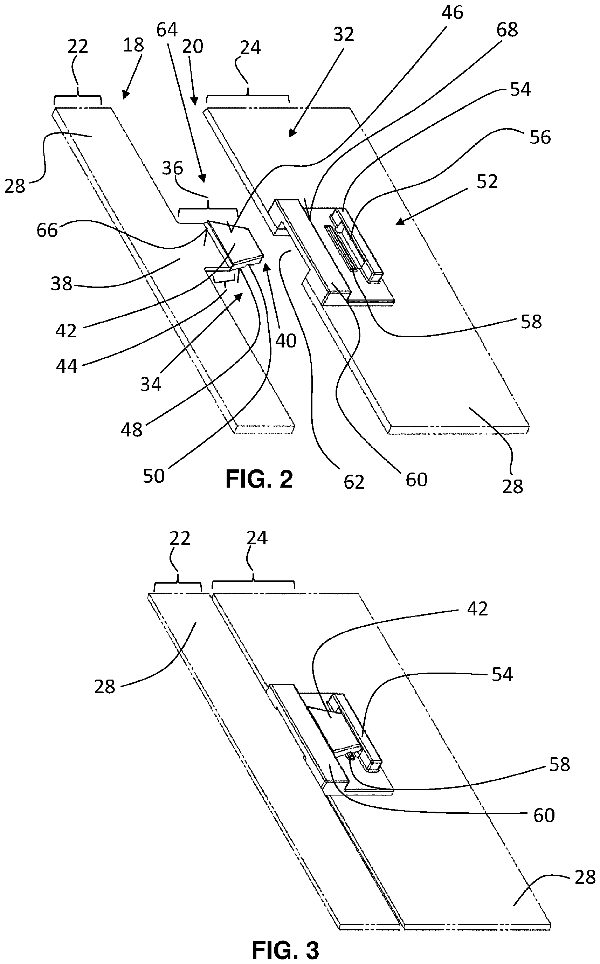

Der grundsätzliche Aufbau einer Steckverbindungsanordnung 32, mit der sich, bezogen auf das Ausführungsbeispiel gemäß Fig. 1, die Manschette 12 längs der beiden Begrenzungsränder 18, 20 verschließen lässt, ist in den Fign. 2 bis 4 gezeigt. Von dem Begrenzungsrand 18 steht eine Stecklasche 34 ab, die einen Steg 36 aufweist, der ein erstes Ende 38 aufweist, welches einstückig mit dem Randbereich 22 verbunden ist. Das dem ersten Ende 38 gegenüberliegende Ende der Stecklasche 34 bildet ein Einsteckende 40 an einem in diesem Ausführungsbeispiel verdickten Endabschnitt 42 der Stecklasche 34. Das Einsteckende 40 ist gegenüber dem zum Ende 38 weisenden Abschnitt 44 der Stecklasche 34 verdickt. Die Stecklasche 34 weist eine Oberseite 46 sowie eine Unterseite 48 auf. An der Unterseite 48 des verdickten Endabschnitts 42 der Stecklasche 34 befindet sich eine Verriegelungsvertiefung 50, die als quer zur Erstreckung der Stecklasche 34 verlaufende Rille ausgebildet ist.

Im Randbereich 24 des gegenüberliegenden Begrenzungsrandes 20 befindet sich auf der Kunststoff-Trägerschicht 28 ein Aufnahmeelement 52 der Steckverbindungsanordnung 32. Dieses Aufnahmeelement 52 weist eine aufragende Rippe 54 auf, in der eine zum gegenüberliegenden Begrenzungsrand 18 weisende bzw. zu diesem Begrenzungsrand 18 hin offene Einstecköffnung 56 ausgebildet ist. Diese Einstecköffnung 56 ist nach Art einer Sacklochöffnung ausgebildet. Vor der Einstecköffnung 56 befindet sich ein Verriegelungsvorsprung 58 des Aufnahmeelements 52, der nach Art einer länglichen Verdickung oder Rippe ausgebildet ist.

Wird nun das Einsteckende 40 des sich vorzugsweise konisch verjüngenden Endabschnitts 42 in die Einstecköffnung 56 eingeführt, so muss das Einsteckende 40 zunächst über den vor der Einstecköffnung befindlichen Verriegelungsvorsprung 58 hinwegbewegt werden, um danach durch Niederdrücken in die Einstecköffnung 56 zu gelangen. Das in der Einstecköffnung 56 des Aufnahmeelements 52 befindliche Einsteckende 40 der Stecklasche 34 hält also sozusagen das Einsteckende 40 und den vorderen Teil des Endabschnitts 42 der Stecklasche 34 nieder und damit den Verriegelungsvorsprung 58 in Eingriff mit der Verriegelungsvertiefung 50.

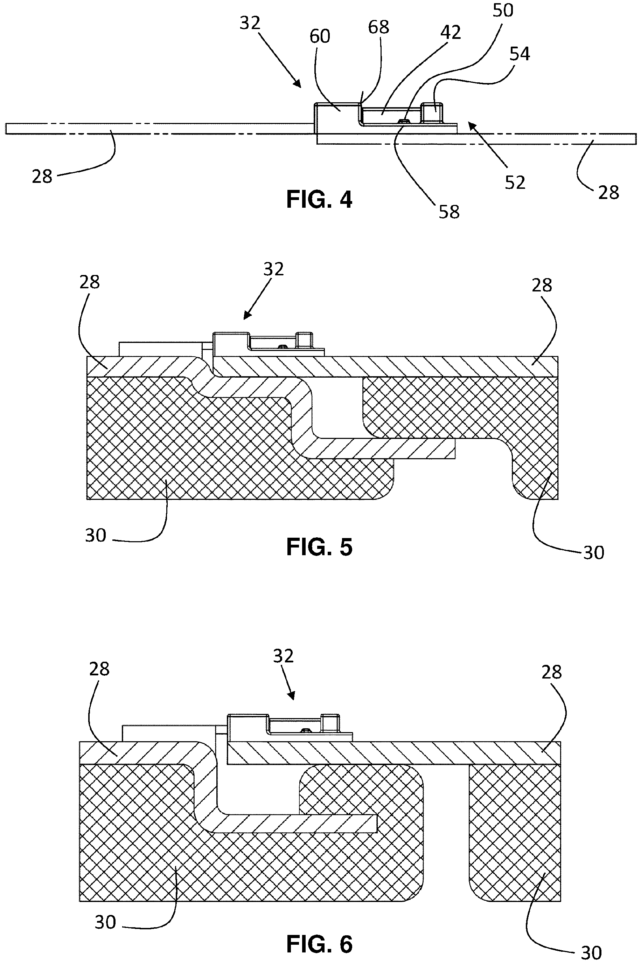

Zusätzlich weist das Aufnahmeelement 52 mit Vorteil noch einen Niederhaltebügel 60 auf, der dem Verriegelungsvorsprung 58 vorgelagert ist und vorzugsweise mit dem Begrenzungsrand 20 fluchtet. Der Niederhaltebügel 60 bildet unter sich einen Durchlass 62, durch den hindurch die Stecklasche 34 geführt werden muss, damit ihr Einsteckende 40 in die Einstecköffnung 56 eingeführt werden kann. Die Höhe des Durchlasses 62, d.h. der Abstand zwischen der Unterseite der Kunststoff-Trägerschicht und der Unterseite des Niederhaltebügels 60 ist vorzugsweise gleich der Dicke des Steges 36 der Stecklasche 34 in dessen Abschnitt 44. Die Stecklasche 34 wird nun mit ihrem verdickten Endabschnitt 42 unter dem Niederhaltebügel 60 hindurchgeführt. Der verdickte Endabschnitt 42 bildet an seinem bezogen auf die Einsteckrichtung hinteren Ende eine Verriegelungsschulter 64 mit einer vorzugsweise orthogonal verlaufenden Verriegelungsfläche 66, die im zusammengesteckten Zustand der Steckverbindungsanordnung an dem der Einstecköffnung 56 zugewandten Rand 68 des Niederhaltebügels 60 anliegt. Der verdickte Endabschnitt 42 ist also auf diese Art und Weise zwischen der Rippe 54 des Aufnahmeelements 52 und dem Niederhaltebügel 60 "gefangen". Dies ist in den Fign. 3 und 4 zu erkennen.

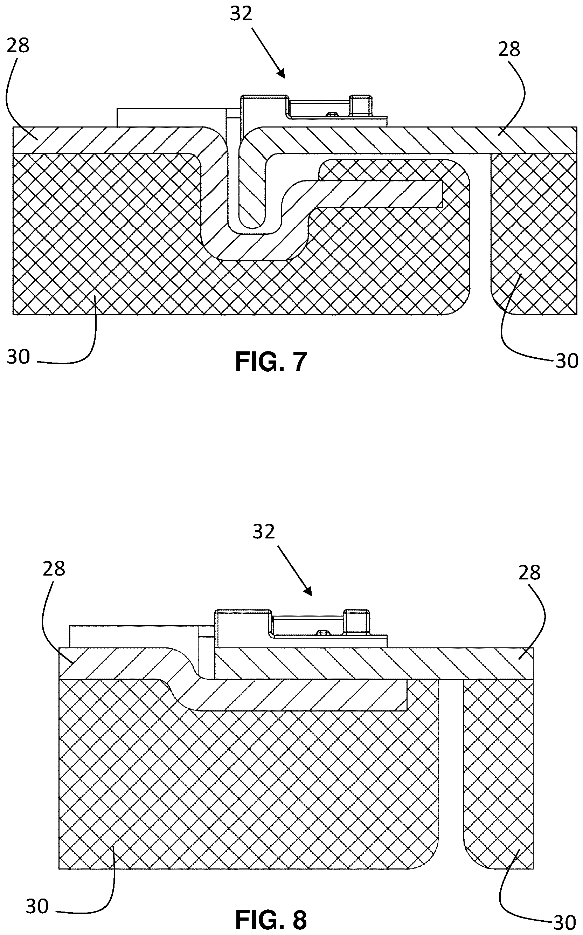

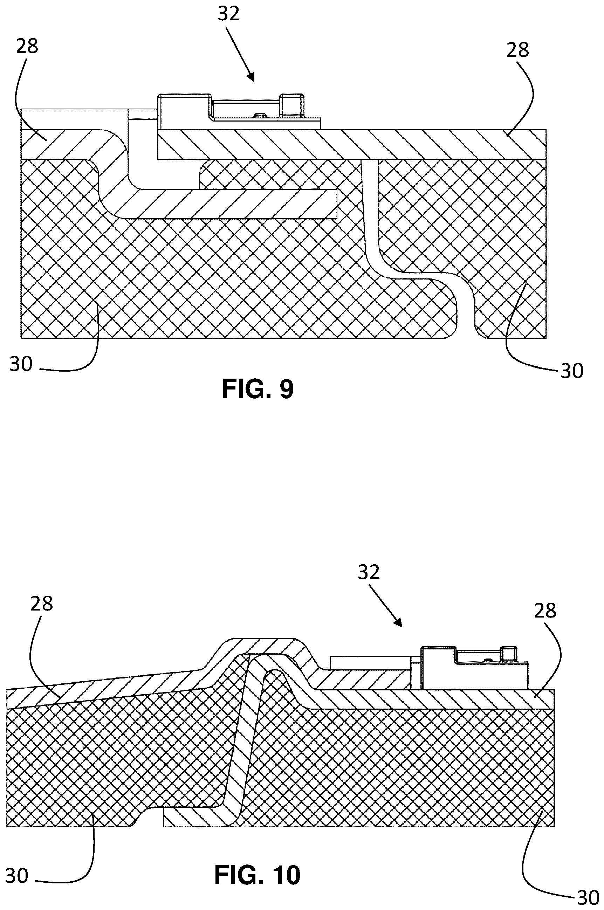

In den Fign. 5 bis 10 sind verschiedene Ausgestaltungen der sich überlappenden Randbereiche 22, 24 der Begrenzungsränder 18, 20 gezeigt. Die Unterschiede bestehen vor allem darin, dass die Kunststoff-Trägerschichten an den Begrenzungsrändern teilweise von dem Schalldämpfungsmaterial umfasst sind (siehe beispielsweise Fign. 6 und 9). Zum Teil liegen die Kunststoff-trägerschichten 28 innerhalb ihrer Randbereiche direkt aufeinander auf (siehe beispielsweise die Fign. 5, 8 und 10), wobei zusätzlich auch noch das Schalldämpfungsmaterial der Schalldämpfungsschicht 30 an dem einen Randbereich auf der Kunststoff-Trägerschicht des anderen Randbereichs aufliegt (siehe wiederum beispielhaft Fign. 5, 8 und 10). In Fig. 7 ist eine zusätzliche Formschussverbindung in den Randbereichen der Kunststoff-Trägerschicht 28 gezeigt. Auch Fig. 10 zeigt eine derartige Formschlussverbindung. In beiden Fällen wird der Zusammenhalt der Manschette an deren Begrenzungsrändern verbessert.

### BEZUGSZEICHENLISTE

- 10: Schallisolationsvorrichtung
- 12: Manschette
- 14: Elektromotor
- 16: Gehäuse
- 18: Begrenzungsrand
- 20: Begrenzungsrand
- 22: Randbereich des Begrenzungsrandes
- 24: Randbereich des Begrenzungsrandes
- 26: Verbundmaterialwand
- 28: Kunststoff-Trägerschicht
- 30: Schalldämpfungsschicht
- 32: Steckverbindungsanordnung
- 34: Stecklasche der Steckverbindungsanordnung
- 36: Steg der Stecklasche
- 38: Ende des Steges
- 40: Einsteckende des Steges
- 42: Endabschnitt der Stecklasche
- 44: Abschnitt der Stecklasche
- 46: Oberseite der Stecklasche
- 48: Unterseite der Stecklasche
- 50: Verriegelungsvertiefung der Stecklasche
- 52: Aufnahmeelement der Steckverbindungsanordnung
- 54: Rippe
- 56: Einstecköffnung des Aufnahmeelements
- 58: Verriegelungsvorsprung des Aufnahmeelements
- 60: Niederhaltebügel des Aufnahmeelements
- 62: Durchlass unter dem Niederhaltebügel
- 64: Verriegelungsschulter
- 66: Verriegelungsfläche
- 68: Rand des Niederhaltebügels

### LITERATURVERZEICHNIS

US-A-2018/0080666

US-A-2008/0099275

US-A-2005/0056481

US-A-4 991 406

US-A-6 062 033

DOMININGHAUS, Hans: Die Kunststoffe und ihre Eigenschaften, 5., völlig neu bearb. und erw. Aufl. Berlin [u.a.]: Springer, 1998, S. 285 - ISBN 978-3-662-06664-5

ERHARD, Gunter: Konstruieren mit Kunststoffen, 4. Aufl., München: Hanser, 2008, S. 332 - ISBN 978-3-446-41646-8

## Patentansprüche

1. Vorrichtung zur Schallisolation einer Maschine, mit
- einer Manschette (12), die eine schalldämpfende Verbundmaterialwand (26) mit einer Kunststoff-Trägerschicht (28) mit einer Shore-A-Härte im Bereich von 66 bis 90, insbesondere im Bereich von 70 bis 85, als Außenschicht und eine Schalldämpfungsschicht (30) als Innenschicht aufweist,
- wobei die Verbundmaterialwand (26) zwei aneinander- und/oder übereinanderliegende Randbereiche (22, 24) mit jeweils einem Begrenzungsrand (18, 20) aufweist, die mittels mindestens einer Steckverbindungsanordnung (32) aneinander- und/oder übereinanderliegend verbindbar sind,
- wobei die mindestens eine Steckverbindungsanordnung (32) eine in dem einen ersten Randbereich (2) der Verbundmaterialwand (26) angeordnete Stecklasche (34) und ein in dem anderen zweiten Randbereich (20) der Verbundmaterialwand (26) angeordnetes Aufnahmeelement (52) aufweist, in das die Stecklasche (34) einsteckbar ist,
- **dadurch gekennzeichnet dass**
die Stecklasche (34) einen Steg (36) aufweist, der ein mit der Kunststoff-Trägerschicht (28) verbundenes Ende (38) sowie einen diesem Ende (38) abgewandten Endabschnitt (42) mit einem Einsteckende (40) und eine Oberseite (46) sowie eine Unterseite (48) aufweist,
- wobei der Steg (36) an der Unterseite (48) seines Endabschnitts (42) mindestens eine Verriegelungsvertiefung (50) aufweist und
- wobei das Aufnahmeelement (52) der mindestens einen Steckverbindungsanordnung (32) eine zum ersten Randbereich (22) hin weisende Einstecköffnung (56) für das Einsteckende (40) und zumindest einen Teil des Endabschnitts (42) des Steges (36) der Stecklasche (34) und einen in Einsteckrichtung der Stecklasche (34) in die Einstecköffnung (56) betrachtet vor dieser in dem zweiten Randbereich (24) angeordneten Verriegelungsvorsprung (58) aufweist, der bei von der Einstecköffnung (56) aufgenommenem Einsteckende (40) des Steges (36) der Stecklasche (34) in die Verriegelungsvertiefung (50) an dessen Unterseite (48) eingetaucht ist.

2. Vorrichtung nach Anspruch 1, **dadurch gekennzeichnet, dass** zwischen dem Verriegelungsvorsprung (58) des Aufnahmeelements (52) und dem Begrenzungsrand (20) des zweiten Randbereichs (24) ein Niederhaltebügel (60) angeordnet ist, der eine in Einsteckrichtung der Stecklasche (34) in die Einstecköffnung (56) betrachtet vor dem Verriegelungsvorsprung (58) angeordnete Durchstecköffnung (62) für die Stecklasche (34) bildet.

3. Vorrichtung nach Anspruch 1 oder 2, **dadurch gekennzeichnet, dass** der Steg (36) der Stecklasche (34) vom Begrenzungsrand (18) des ersten Randbereichs (22) der Verbundmaterialwand (26) absteht und dass das Aufnahmeelement (52) im zweiten Randbereich (24) der Verbundmaterialwand (26) angeordnet ist.

4. Vorrichtung nach einem der Ansprüche 1 bis 3, **dadurch gekennzeichnet, dass** die Stecklasche (34) und das Aufnahmeelement (52) der mindestens einen Steckverbindungsanordnung (32) an und/oder auf der Kunststoff-Trägerschicht (28) angeordnet und insbesondere einteilig mit der Kunststoff-Trägerschicht (28) ausgebildet sind.

5. Vorrichtung nach einem der Ansprüche 1 bis 4, **dadurch gekennzeichnet, dass** der Endabschnitt (42) des Steges (36) der Stecklasche (34) an seiner Oberseite (46) einen erhabenen Verdickungsbereich aufweist.

6. Vorrichtung nach Anspruch 5, **dadurch gekennzeichnet, dass** der Verdickungsbereich eine dem Einsteckende (40) des Steges (36) der Stecklasche (34) abgewandte Verriegelungsschulter (64) aufweist, die durch eine insbesondere im Wesentlichen orthogonal zur Oberseite (46) des Steges (36) verlaufende Verriegelungsfläche (66) gebildet ist und zur Anlage an dem der Einstecköffnung (56) zugewandten Rand (68) des Niederhaltebügels (60) des Aufnahmeelements (52) vorgesehen ist.

7. Vorrichtung nach einem der Ansprüche 1 bis 6, **dadurch gekennzeichnet, dass** eine die Einstecköffnung des Aufnahmeelements (52) bildende Verdickung (56) auf und/oder an der Kunststoff-Trägerschicht (28), der Verriegelungsvorsprung (58) des Aufnahmeelements (52) sowie der Steg (36) der Stecklasche (34) und, sofern vorhanden, der Niederhaltebügel (60) des Aufnahmeelements (52) sowie der Verdickungsbereich des Steges (36) der Stecklasche (34) mit Verriegelungsschulter (64) aus dem Material der Kunststoff-Trägerschicht (28) hergestellt ist.

8. Vorrichtung nach einem der Ansprüche 1 bis 6, **dadurch gekennzeichnet, dass** eine die Einstecköffnung (56) des Aufnahmeelements (52) bildende Verdickung (56) auf und/oder an der Kunststoff-Trägerschicht (28), der Verriegelungsvorsprung (58) des Aufnahmeelements (52) sowie der Steg (36) der Stecklasche (34) und, sofern vorhanden, der Niederhaltebügel (60) des Aufnahmeelements (52) sowie der Verdickungsbereich des Steges (36) der Stecklasche (34) mit Verriegelungsschulter (64) aus dem Material der Kunststoff-Trägerschicht (28) mit dieser einteilig hergestellt ist.

9. Vorrichtung nach einem der Ansprüche 1 bis 8, **dadurch gekennzeichnet, dass** die Schalldämpfungsschicht (30) an dem einen Randbereich (22) der Verbundmaterialwand (26) auf und/oder an der Kunststoff-Trägerschicht (28) des anderen Randbereichs (24) der Verbundmaterialwand (26) anliegt.

10. Vorrichtung nach einem der Ansprüche 1 bis 9, **dadurch gekennzeichnet, dass** die Verbundmaterialwand (26) der Manschette (12) mehrteilig ausgebildet ist und dass die einzelnen Teile der Verbundmaterialwand (26) durch jeweils ein oder mehrere Steckverbindungsanordnungen (32) gemäß zumindest einem der Ansprüche 1 bis 9 miteinander mechanisch verbunden sind.

11. Vorrichtung nach einem der Ansprüche 1 bis 9, **dadurch gekennzeichnet, dass** die Manschette (12) zwei Halbschalen aufweist, von denen jede eine Verbundmaterialwand (26) aufweist, dass die beiden Halbschalen zum Aufklappen und zum Zuklappen miteinander beweglich verbunden sind, dass die Verbundmaterialwand (26) jeder Halbschale einen Randbereich aufweist und dass die Verbundmaterialwände (26) beider Halbschalen an ihren Randbereichen (22, 24) mittels ein oder mehrerer Steckverbindungsanordnung (32) gemäß zumindest einem der Ansprüche 1 bis 9 miteinander mechanisch verbunden sind.

## Claims

1. Apparatus for sound insulation of a machine, with
- a sleeve (12) which has a sound-absorbing composite material wall (26) with a plastic carrier layer (28) with a Shore-A-hardness in the range from 66 to 90, in particular in the range from 70 to 85, as outer layer and a sound-absorbing layer (30) as inner layer,
- wherein the composite material wall (26) has two edge regions (22, 24) which lie against and/or above one another and each have a boundary edge (18, 20) which can be connected to one another and/or to one another by means of at least one plug-in connection arrangement (32),
- wherein the at least one plug-in connection arrangement (32) has a plug-in tab (34) arranged in the one first edge region (2) of the composite material wall (26) and a receiving element (52) which is arranged in the other second edge region (20) of the composite material wall (26) and into which the plug-in tab (34) can be plugged,
- **characterized in that**
the plug-in tab (34) has a web (36) which has an end (38) connected to the plastic carrier layer (28) and an end section (42) facing away from this end (38) with an insertion end (40) and an upper side (46) and a lower side (48),
- wherein the web (36) has at least one locking recess (50) on the underside (48) of its end portion (42), and
- wherein the receiving element (52) of the at least one plug-in connection arrangement (32) has an insertion opening (56) facing the first edge region (22) for the insertion end (40) and at least a part of the end portion (42) of the web (36) of the plug-in tab (34) and a locking projection (58) arranged in front of the insertion opening (56) in the second edge region (24) as viewed in the direction of insertion of the plug-in tab (34) into the insertion opening (56), which, when the insertion end (40) of the web (36) of the plug-in tab (34) is received by the insertion opening (56), is immersed in the locking recess (50) on the underside (48) thereof.

2. Apparatus according to claim 1, **characterized in that** between the locking projection (58) of the receiving element (52) and the boundary edge (20) of the second edge region (24) there is arranged a holding-down bracket (60) which, viewed in the insertion direction of the plug-in tab (34) into the insertion opening (56), forms a through-opening (62) for the plug-in tab (34) arranged in front of the locking projection (58).

3. Apparatus according to claim 1 or 2, **characterized in that** the web (36) of the plug-in tab (34) projects from the boundary edge (18) of the first edge region (22) of the composite material wall (26), and **in that** the receiving element (52) is arranged in the second edge region (24) of the composite material wall (26).

4. Apparatus according to any one of claims 1 to 3, **characterized in that** the plug-in tab (34) and the receiving element (52) of the at least one plug-in connection arrangement (32) are arranged on and/or at the plastic carrier layer (28) and, in particular, are formed integrally with the plastic carrier layer (28).

5. Apparatus according to any one of claims 1 to 4, **characterized in that** the end portion (42) of the web (36) of the plug-in tab (34) has a raised thickened region on its upper surface (46).

6. Apparatus according to claim 5, **characterized in that** the thickened region has a locking shoulder (64) facing away from the insertion end (40) of the web (36) of the plugin tab (34), which locking shoulder is formed by a locking surface (66) extending in particular substantially orthogonally to the upper side (46) of the web (36) and is provided for bearing against the edge (68), facing the insertion opening (56), of the holding-down bracket (60) of the receiving element (52).

7. Apparatus according to one of the claims 1 to 6, **characterized in that** a thickening (56) forming the insertion opening of the receiving element (52) on and/or at the plastic carrier layer (28), the locking projection (58) of the receiving element (52) as well as the web (36) of the plug-in tab (34) and, the holding-down bracket (60) of the receiving element (52), if present, and the thickened region of the web (36) of the plugin tab (34) with locking shoulder (64) are made of the material of the plastic carrier layer (28).

8. Apparatus according to one of the claims 1 to 6, **characterized in that** a thickening (56) forming the insertion opening (56) of the receiving element (52) on and/or at the plastic carrier layer (28), the locking projection (58) of the receiving element (52) as well as the web (36) of the plug-in tab (34) and, the holding-down bracket (60) of the receiving element (52), if present, and the thickened region of the web (36) of the plug-in tab (34) with locking shoulder (64) are made of the material of the plastic carrier layer (28) in one piece with the latter.

9. Apparatus according to any one of claims 1 to 8, **characterized in that** the sound 10 damping layer (30) on one edge region (22) of the composite material wall (26) rests on and/or against the plastic carrier layer (28) of the other edge region (24) of the composite material wall (26).

10. Apparatus according to any one of claims 1 to 9, **characterized in that** the composite material wall (26) of the sleeve (12) is formed in multiple parts and **in that** the individual parts of the composite material wall (26) are mechanically connected to one another by one or more respective plug-in connection arrangements (32) according to at least one of claims 1 to 9.

11. Apparatus according to any one of claims 1 to 9, **characterized in that** the sleeve (12) has two half-shells, each of which has a composite material wall (26), **in that** the two half-shells are movably connected to each other for unfolding and for folding, **in that** the composite material wall (26) of each half-shell has an edge region, and **in that** the composite material walls (26) of both half-shells are mechanically connected to each other at their edge regions (22, 24) by means of one or more plug-in connection arrangements (32) according to at least one of claims 1 to 9.

## Revendications

1. Dispositif d'insonorisation d'une machine, avec
- une manchette (12) qui présente une paroi en matériau composite (26) insonorisante avec une couche de support en matière plastique (28) avec une dureté Shore A dans la plage de 66 à 90, en particulier dans la plage de 70 à 85, comme couche externe et une couche d'insonorisation (30) comme couche interne,
- dans lequel la paroi en matériau composite (26) présente deux zones de bord (22, 24) juxtaposées et/ou superposées avec respectivement un bord de délimitation (18, 20) qui sont reliables en étant placées l'une au niveau de l'autre et/ou l'une au-dessus de l'autre au moyen d'au moins un système de raccordement par enfichage (32),
- dans lequel l'au moins un système de raccordement par enfichage (32) présente une patte insérable (34) agencée dans l'une première zone de bord (2) de la paroi en matériau composite (26) et un élément de réception (52) agencé dans l'autre deuxième zone de bord (20) de la paroi en matériau composite (26), dans lequel la patte insérable (34) peut être enfichée,
- **caractérisé en ce que**
la patte insérable (34) présente une nervure (36) qui présente une extrémité (38) reliée à la couche de support en matière plastique (28) ainsi qu'une section d'extrémité (42) éloignée de cette extrémité (38) avec une extrémité d'enfichage (40) et un côté supérieur (46) ainsi qu'un côté inférieur (48),
- dans lequel la nervure (36) présente sur le côté inférieur (48) de sa section d'extrémité (42) au moins une cavité de verrouillage (50) et
- dans lequel l'élément de réception (52) de l'au moins un système de raccordement par enfichage (32) présente une ouverture d'enfichage (56) tournée vers la première zone de bord (22) pour l'extrémité enfichable (40) et au moins une partie de la section d'extrémité (42) de la nervure (36) de la patte insérable (34) et une saillie de verrouillage (58) agencée considérée dans le sens d'enfichage de la patte insérable (34) dans l'ouverture d'enfichage (56) avant celle-ci dans la deuxième zone de bord (24) qui est enfoncée pour l'extrémité d'enfichage (40) reçue par l'ouverture d'enfichage (56) de la nervure (36) de la patte insérable (34) dans la cavité de verrouillage (50) sur son côté inférieur (48).

2. Dispositif selon la revendication 1, **caractérisé en ce qu'**un étrier de retenue (60) est agencé entre la saillie de verrouillage (58) de l'élément de réception (52) et le bord de délimitation (20) de la deuxième zone de bord (24), lequel forme une ouverture d'enfichage (62) agencée considérée dans le sens d'enfichage de la patte insérable (34) dans l'ouverture d'enfichage (56) avant la saillie de verrouillage (58) pour la patte insérable (34).

3. Dispositif selon la revendication 1 ou 2, **caractérisé en ce que** la nervure (36) de la patte insérable (34) dépasse du bord de délimitation (18) de la première zone de bord (22) de la paroi en matériau composite (26) et que l'élément de réception (52) est agencé dans la deuxième zone de bord (24) de la paroi en matériau composite (26).

4. Dispositif selon l'une quelconque des revendications 1 à 3, **caractérisé en ce que** la patte insérable (34) et l'élément de réception (52) d'au moins un système de raccordement par enfichage (32) sont agencés au niveau de et/ou sur la couche de support en matière plastique (28) et sont réalisés en particulier d'un seul tenant avec la couche de support en matière plastique (28).

5. Dispositif selon l'une quelconque des revendications 1 à 4, **caractérisé en ce que** la section d'extrémité (42) de la nervure (36) de la patte insérable (34) présente sur son côté supérieur (46) une zone d'épaississement en relief.

6. Dispositif selon la revendication 5, **caractérisé en ce que** la zone d'épaississement présente un épaulement de verrouillage (64) éloigné de l'extrémité d'enfichage (40) de la nervure (36) de la patte insérable (34) qui est formé par une surface de verrouillage (66) s'étendant en particulier sensiblement orthogonalement au côté supérieur (46) de la nervure (36) et est prévu pour l'appui contre le bord (68) tourné vers l'ouverture d'enfichage (56) de l'étrier de retenue (60) de l'élément de réception (52).

7. Dispositif selon l'une quelconque des revendications 1 à 6, **caractérisé en ce qu'**un épaississement (56) formant l'ouverture d'enfichage de l'élément de réception (52) est fabriqué sur et/ou au niveau de la couche de support en matière plastique (28), la saillie de verrouillage (58) de l'élément de réception (52) ainsi que la nervure (36) de la patte insérable (34) et, si présent, l'étrier de retenue (60) de l'élément de réception (52) ainsi que la zone d'épaississement de la nervure (36) de la patte insérable (34) avec l'épaulement de verrouillage (64) en le matériau de la couche de support en matière plastique (28).

8. Dispositif selon l'une quelconque des revendications 1 à 6, **caractérisé en ce qu'**un épaississement (56) formant l'ouverture d'enfichage (56) de l'élément de réception (52) est fabriqué sur et/ou au niveau de la couche de support en matière plastique (28), la saillie de verrouillage (58) de l'élément de réception (52) ainsi que la nervure (36) de la patte insérable (34) et, si présent, l'étrier de retenue (60) de l'élément de réception (52) ainsi que la zone d'épaississement de la nervure (36) de la patte insérable (34) avec l'épaulement de verrouillage (64) en le matériau de la couche de support en matière plastique (28) d'un seul tenant avec celui-ci.

9. Dispositif selon l'une quelconque des revendications 1 à 8, **caractérisé en ce que** la couche d'insonorisation (30) repose contre l'une zone de bord (22) de la paroi en matériau composite (26) sur et/ou au niveau de la couche de support en matière plastique (28) de l'autre zone de bord (24) de la paroi en matériau composite (26).

10. Dispositif selon l'une quelconque des revendications 1 à 9, **caractérisé en ce que** la paroi en matériau composite (26) de la manchette (12) est réalisée en plusieurs parties et que les parties individuelles de la paroi en matériau composite (26) sont reliées mécaniquement entre elles par respectivement un ou plusieurs systèmes de raccordement par enfichage (32) selon au moins l'une quelconque des revendications 1 à 9.

11. Dispositif selon l'une quelconque des revendications 1 à 9, **caractérisé en ce que** la manchette (12) présente deux demi-coques, dont chacune présente une paroi en matériau composite (26), que les deux demi-coques sont reliées de manière mobile entre elles pour l'ouverture et la fermeture, que la paroi en matériau composite (26) de chaque demicoque présente une zone de bord et que les parois en matériau composite (26) des deux demi-coques sont reliées mécaniquement entre elles au niveau de leurs zones de bord (22, 24) au moyen d'un ou plusieurs systèmes de raccordement par enfichage (32) selon au moins l'une quelconque des revendications 1 à 9.
